# EUROPÄISCHE PATENTSCHRIFT

(11) **EP 3 356 176 B1**
(45) Veröffentlichungstag und Bekanntmachung des Hinweises auf die Patenterteilung: **15.04.2020**
(21) Anmeldenummer: 16787341.3
(22) Anmeldetag: 29.09.2016
(51) Int. Cl.: B60L 50/20, B60L 3/00

(54) **RADAUFHÄNGUNG EINES ELEKTRISCHEN ANTRIEBS ZUR UNTERSTÜTZUNG EINES MANUELLEN BEWEGUNGSIMPULSES**
WHEEL SUSPENSION OF AN ELECTRICAL DRIVE FOR SUPPORTING A MANUAL MOVEMENT IMPULSE
SUSPENSION DE ROUE D'UN ENTRAÎNEMENT ÉLECTRIQUE PERMETTANT D'ASSISTER UNE IMPULSION DE DÉPLACEMENT MANUELLE

(30) Priorität: 30.09.2015 DE 102015218950
(43) Veröffentlichungstag der Anmeldung: 08.08.2018
(73) Patentinhaber: Siemens Healthcare GmbH, 91052 Erlangen (DE)
(72) Erfinder: BACHMAIER, Georg, 80469 München (DE); CYRIACKS, Marco, 81669 München (DE); FEHRE, Jens, 91353 Hausen (DE); LIMMER, Andreas, 90768 Fürth (DE); ZÖLS, Wolfgang, 81249 München-Lochhausen (DE)
(86) Internationale Anmeldenummer: PCT/EP2016/073250
(87) Internationale Veröffentlichungsnummer: WO 2017/055445

(56) Entgegenhaltungen:
- DE-T2- 3 784 794
- US-A- 5 746 282
- US-A1- 2014 251 704

## Beschreibung

Die Erfindung betrifft allgemein eine Radaufhängung, insbesondere für eine Vorrichtung mit einem Elektroantrieb eines Rades zur Unterstützung eines manuellen Bewegungsimpulses, insbesondere für ein mobiles medizinisches Gerät, wie beispielsweise ein mobiles C-Bogen-System.

Radaufhängungen für elektrisch angetriebene Vorrichtungen, bei denen der elektrische Antrieb im Rad integriert ist, sind allgemein bekannt.

Grundsätzlich kann es relativ hohen Kraftaufwand erfordern, um manche Vorrichtungen oder Mechanismen mit deren Freiheitsgraden in Bewegung zu versetzen. Dies gilt insbesondere wenn ein hoher Reibungskoeffizient oder eine hohe Gewichtskraft vorliegt. Hierfür ist es allgemein bekannt eine spezielle Steuerelektronik einzusetzen, mit der ein elektrischer Antrieb der jeweiligen Vorrichtung gesteuert wird. Allerdings erfordert dies eine eingehende Kenntnis der Steuerelektronik durch das Bedienpersonal. Einfacher ist hingegen eine unmittelbare Kraftunterstützung der Schubkraft, die ein Maschinenbediener auf eine Vorrichtung zu deren Fortbewegung aufbringt zu haben. Das Problem hierbei ist jedoch, die äußere Krafteinwirkung des Maschinenbedieners quantitativ zu erkennen und umzusetzen.

Zusätzlich ist es vor allem bei mobilen Vorrichtungen mit hoher Masse oder Geschwindigkeit erforderlich, die Kollision mit Objekten oder Personen zu erkennen, um den Schaden für den Mechanismus und dessen Umgebung zu minimieren, da schwere Vorrichtungen bei entsprechender Geschwindigkeit mit hoher kinetischer Energie bewegt werden. Einfache Steuerungen, bei denen nur die einwirkende Schubkraft umgesetzt wird, erzeugen im Falle einer Kollision aufgrund der natürlichen Einwirkung des Maschinenbedieners, die in der Regel durch die Kollision verstärkt wird, da dieser der Trägheit der Masse folgt, zunächst noch zu einer Verstärkung des Kollisionsereignisses. Soll dies verhindert werden ist es bei den bekannten Systemen notwendig eine zusätzliche und aufwendige Sensorik einzubauen, um eine vorliegende Kollision zu registrieren und entsprechend gegenzusteuern beziehungsweise zumindest den Vortrieb zu beenden.

Aus der Druckschrift DE 10 2011 078 807 A1 ein Antriebssystem, insbesondere für ein Elektro- und/oder Hybridfahrzeug, bekannt, welches einen stehenden Teil und einen drehbar gelagerten Teil sowie einen Elektromotor mit einem Stator und Rotor umfasst, wobei der stehende Teil den Stator und der drehbar gelagerte Teil den Rotor umfasst. Um eine Verkippung des Lagers beziehungsweise des Rotors zu erkennen, insbesondere um ein Anschleifen des Rotors am Stator zu verhindern und/oder einen Schaden im System zu erkennen, umfasst das Antriebssystem ein Lagerverkippungsdetektierungssystem zur Detektion einer Lagerverkippung des drehbar gelagerten Teils, wobei das Lagerverkippungsdetektierungssystem Daten des Elektromotors und/oder mindestens eines
Sensors auswertet.

Die Druckschrift DE 101 11 800 A1 beschreibt noch ein verfahrbares medizintechnisches Gerät mit Rädern, wobei an wenigstens einem Rad eine elektromechanische Feststellbremse angeordnet ist.

Schließlich offenbart die Druckschrift DE 42 37 013 A1 noch ein gattungsgemäßes motorisch verstellbares Röntgengerät.

Aus der Druckschrift US 5 746 282 A ist eine Radaufhängung mit einem Kraftsensor gemäß den oberbegriffbildenden Merkmalen der Ansprüche 1 und 7 bekannt.

Als weiteren Stand der Technik wird auf die Druckschriften US 2014/251704 A1 und DE 37 84 794 T2 verwiesen.

Es ist daher Aufgabe der Erfindung eine Radaufhängung für elektrisch angetriebene Räder einer mobilen Vorrichtung beziehungsweise eine Vorrichtung mit einer solchen Radaufhängung zu finden, welche einerseits eine schubabhängige Kraftverstärkung eines Maschinenbedieners erlaubt und andererseits auch eine zumindest kollisionsdämpfende Wirkung entfaltet. Diese Aufgabe wird durch die Merkmale der unabhängigen Patentansprüche gelöst. Vorteilhafte Weiterbildungen der Erfindung sind Gegenstand untergeordneter Ansprüche.

Die Erfinder haben erkannt, dass es mit Hilfe eines in der Radaufhängung einer mobilen Vorrichtung integrierten stabilen Pendels möglich ist, die äußere Krafteinwirkung zu messen und unterstützen zu können. Unter einem stabilen Pendel wird im Sinne der Erfindung ein Pendel verstanden, welches aufgrund seiner Aufhängungs- und Anbringungssituation durch die Gewichtskraft der Vorrichtung und ohne Einwirkung einer externen Schubkraft in eine stabile Ausgangslage eingestellt wird und bei einer Einwirkung einer Schubkraft auf die Vorrichtung aus dieser Ausgangslage ausgelenkt oder zumindest mit einer Tension beaufschlagt wird. Im Sinne der Anmeldung wird allerdings auch eine Tension - im Sinne einer Verspannung - als Auslenkung verstanden, da jede Tension auch eine zumindest minimale Auslenkung erfordert.

Wird das Pendel in der Radaufhängung derart integriert, dass es eine Verbindung zwischen der Radachse des elektrischen Antriebs und einem unterhalb der Radachse gelegenen Aufhängungspunkt, der stabil mit der Vorrichtung selbst verbunden ist, darstellt, so erzwingt die Gewichtskraft der Vorrichtung ohne sonstige Krafteinwirkungen die Einstellung einer neutralen Ausgangsposition. Sobald jedoch auf die Vorrichtung eine Schubkraft einwirkt, erfolgt eine Auslenkung dieses Pendels, welche detektiert werden kann. Wird ein Sensor, welcher eine solche Auslenkung detektiert mit einer Steuerung des elektrischen Radantriebes verbunden, so kann dieser Auslenkung automatisch über einen entsprechenden Regelkreis entgegengewirkt werden, so dass eine Unterstützung der einwirkenden Schubkraft bewirkt wird.

Im Falle einer Kollision der mobilen Vorrichtung mit einem Gegenstand entsteht eine entgegengerichtete Schubkraft, welche über den gleichen Mechanismus dazu führt, dass der elektrische Antrieb einer solchen Kollision entgegenwirkt und so zumindest eine kollisionsdämpfende Wirkung entfaltet.

Entsprechend diesem Grundgedanken schlagen die Erfinder eine Radaufhängung einer Vorrichtung mit einem Elektroantrieb eines Rades zur Unterstützung eines manuellen Bewegungsimpulses vor, welche die folgenden Merkmale aufweist:
- ein Verbindungsstück, welches:
   -- biegbar mit einem an der Vorrichtung verbundenen Stützelement befestigt ist,
   -- wobei das Stützelement zumindest einen Teil des Gewichtes der Vorrichtung abstützt,
   welche dahingehend verbessert wurden, dass
- der Elektroantrieb mindestens einen Elektromotor mit einem innenliegendem Stator und einem außenliegendem Rotor aufweist, wobei der Stator fest mit dem Verbindungsstück verbunden ist und das Verbindungsstück aufgrund der nach unten wirkenden Gewichtskraft der Vorrichtung unter Abwesenheit eine senkrecht zur Gewichtskraft wirkenden Schubkraft selbsttätig eine Ausgangsposition einnimmt,
- eine Steuerelektronik, die derart ausgestaltet ist, dass sie mit dem Elektroantrieb einer Auslenkung oder Verbiegung des Verbindungsstückes entgegenwirkt.

Grundsätzlich kann mit dieser Radaufhängung sowohl die Auslenkung als auch die Verbiegung des Verbindungsstückes in beliebiger Richtung detektiert und gemessen werden, die sich von der Richtung der Gewichtskraft unterscheidet. Vorzugsweise wird allerdings innerhalb einer Ebene senkrecht zur Gewichtskraft gemessen werden.

Weiterhin ist es vorteilhaft, wenn der Elektroantrieb einen Elektro-Nabenmotor aufweist, da mit dieser Ausführung eine sehr kompakte Antriebseinheit geschaffen werden kann, die sich in der Radaufhängung integriert.

In einer bevorzugten Ausführung kann die Radaufhängung so gestaltet sein, dass die Auslenkung und/oder Verbiegung des Verbindungsstückes in mindestens zwei voneinander unabhängigen Ebenen senkrecht zur Gewichtskraft gemessen wird.

In einer weiteren Ausgestaltung der erfindungsgemäßen Radaufhängung kann zur Messung der Verbiegung des Verbindungsstückes je zu detektierender Auslenkungsrichtung mindestens ein Dehnmessstreifen oder ein Positionssensor angebracht sein, wobei der mindestens eine Dehnmessstreifen vorzugsweise in Verbindung mit einer Tensionsmessung und der Positionssensor in Verbindung mit einem schwenkbar gelagerten Verbindungsstück als Pendel verwendet werden wird.

Des Weiteren kann die Radaufhängung so ausgestaltet werden, dass der Elektroantrieb als elektrisch angetriebenes Allseitenrad mit variabler Antriebsrichtung in einer Ebene ausgebildet ist. Da ein solcher Elektroantrieb in beliebige Richtung gesteuert werden kann, ohne dass die Radaufhängung selbst drehbar ausgeführt sein müsste, eignet sich eine solche Ausführung insbesondere für Varianten der Radaufhängung, bei der die Auslenkung des Verbindungsstückes nicht auf eine Auslenkungsrichtung beschränkt ist und entsprechend durch Verwendung mehrerer Sensoren nicht nur die Größe der Auslenkung, sondern auch deren Richtung bestimmt wird. Entsprechend kann dann zur Kompensation der Auslenkung und damit zur Bewegungsunterstützung die Fahrtrichtung des jeweiligen Antriebs in die jeweils vorliegende Schubrichtung erfolgen.

In einer besonders einfach zu verwirklichenden und kostengünstig herzustellenden Ausführungsvariante der erfindungsgemäßen Radaufhängung einer Vorrichtung mit einem Elektroantrieb eines Rades zur Unterstützung eines manuellen Bewegungsimpulses schlagen die Erfinder vor, dass diese die folgenden Merkmale aufweist:
- eine Pendelachse, welche:
   -- schwenkbar an einem an der Vorrichtung befestigen Stützelement gelagert ist,
   -- wobei das Stützelement zumindest einen Teil des Gewichtes der Vorrichtung abstützt,
- einen Pendelarm,
- eine Motorachse, wobei erfindungsgemäß:
   -- die Motorachse über den Pendelarm fest mit der Pendelachse verbunden ist,
   -- die Pendelachse unterhalb der Motorachse angeordnet ist, so dass der Pendelarm aufgrund der nach unten wirkenden Gewichtskraft der Vorrichtung unter Abwesenheit eine senkrecht zur Gewichtskraft und senkrecht zur Pendelachse wirkenden Schubkraft selbsttätig eine unausgelenkte Ausgangsposition einnimmt,
- einen Elektroantrieb, der mit der Motorachse verbunden ist,
- eine Steuerelektronik, die derart ausgestaltet ist, dass sie mit dem vom Elektroantrieb angetriebenen Rad einer Auslenkung des Pendelarms entgegenwirkt.

Eine solche Ausführung beschränkt sich grundsätzlich bezüglich der in der Radaufhängung und dem Antrieb vorliegenden Bewegungsrichtung auf eine Richtung, wobei sich auch dadurch die entsprechende Sensorik auf die Verwendung eines einzigen Positionssensors reduzieren und somit auch sehr kostengünstig herstellen lässt. Unter "Richtung" werden in diesem Sinne sowohl positive als auch negative Werte eines Bewegungsvektors verstanden, also sowohl vorwärts als auch rückwärts, entlang eines Vektors gegebenenfalls entlang einer Kreisbahn um einen Drehpunkt.

Vorteilhaft sind hierbei die Pendelachse und die Motorachse parallel zueinander ausgerichtet. Weiterhin treibt der Elektroantrieb bevorzugt ein Rad an, das zur Bewegung der Vorrichtung dient. In diesem Zusammenhang wird darauf hingewiesen, dass zwar eine bevorzugte Ausführung die Radaufhängung einer Vorrichtung betrifft, die sich auf einem weitgehend ebenen Boden bewegt. Jedoch gehört es auch zum Rahmen der Erfindung, wenn das Rad schienengeführt ist und/oder sich hängend in einer Führung, vorzugsweise einer Seilführung, sich befindet.

Weiterhin kann der der Elektroantrieb einen Stator und einen Rotor aufweisen, wobei diese so ausgestaltet sein können, dass der Stator mit dem Pendelarm fest verbunden ist, wobei vorzugsweise Elektromagnete im Stator und Permanentmagnete im Rotor angeordnet sind. Außerdem kann der Rotor umfangsseitig von einem ein Laufrad umgeben sein.

Zur Detektion der Auslenkung des Pendelarms kann ein Sensor derart angeordnet sein, dass er die Auslenkung des Pendelarms detektiert und an die Steuerelektronik des Elektroantriebes weiterleitet. Hierbei kann eine solche Steuerelektronik einen Regelkreis aufweisen, der aufgrund der Auslenkung als Stellgröße die Radgeschwindigkeit als Ausgangsgröße steuert beziehungsweise regelt.

Ein solcher Sensor kann beispielsweise als Winkelsensor oder als Positionssensor ausgebildet sein, gegebenenfalls kann auch ein Näherungssensor verwendet werden, dem sich das Pendel je nach Schubbelastung der Radaufhängung nähert oder von diesem entfernt.

In einer bevorzugten Ausführungsvariante kann die Radaufhängung an einer Vorrichtung angeordnet sein, welche ein fahrbares medizinisches Gerät, insbesondere ein mobiler C-Bogen oder eine medizinische Bedieneinheit, ist.

Neben der Radaufhängung selbst wird auch eine Vorrichtung mit mindestens einer erfindungsgemäßen Radaufhängung vorgeschlagen, wobei bevorzugt zwei erfindungsgemäße Radaufhängung und mindestens ein frei laufendes Rad, wobei das mindestens eine frei laufende Rad bezüglich seiner Fahrtrichtung sich beliebig selbst verstellen kann. Falls mehr als eine erfindungsgemäße Radaufhängung mit jeweils einem elektrisch angetriebenen Rad vorgesehen ist, kann es auch günstig sein, die elektrischen Antriebe über eine gemeinsame Steuer- und/oder Regelvorrichtung zu steuern und auch die von den Sensoren kommenden Sensordaten in solch einer gemeinsamen Steuer- und/oder Regelvorrichtung zu verarbeiten.

Entsprechend kann in einer Ausführungsvariante der Vorrichtung das Stützelement mindestens einer Radaufhängung um eine vertikale Schwenkachse schwenkbar mit ausgeführt werden. Außerdem kann das Stützelement mindestens einer Radaufhängung unbeweglich an einem Gehäuse und/oder Chassis fest um eine vertikale Schwenkachse schwenkbar ausgeführt ist.

Im Folgenden wird die Erfindung anhand der bevorzugten Ausführungsbeispiele mit Hilfe der Figuren näher beschrieben, wobei nur die zum Verständnis der Erfindung notwendigen Merkmale dargestellt sind. Hierbei werden die folgenden Bezugszeichen verwendet: 1: C-Bogen-System; 2: Gehäuse; 3: Räder; 4: C-Bogen; 5: Röntgenröhre; 6: Röntgendetektor; 7: Rechen- und Steuereinheit; 8: Programmspeicher; 9: Griff; A1: erste Achse / Motorachse; A2: zweite Achse / Pendelachse; D: Schubkraft/Druck; DM: Dehnmessstreifen; H1: erster / oberer Haltepunkt; H2: zweiter / unterer Haltepunkt; K: Kugeln der Lagerung; ME: Elektromagnet; MP: Permanentmagnet; P: Verbindungsstück; PG: Positionsgeber / Sensor; R: Rotor; r: kleiner Rotor eines Allseitenrades; S: Stator; SE: Steuerelektronik; V: Vorrichtung; WG: Winkelgeber.

Es zeigen im Einzelnen:
- FIG 1:: Grundprinzip der Erfindung;
- FIG 2:: Prinzipdarstellung der Krafteinwirkungen auf die erfindungsgemäße Radaufhängung;
- FIG 3:: Vertikalschnitt in der Ebene der Achsen durch eine erfindungsgemäße Radaufhängung mit schwenkbar gelagertem Verbindungsstück/Pendel;
- FIG 4:: Vertikalschnitt senkrecht zur Ebene der Achsen durch die erfindungsgemäße Radaufhängung aus FIG 3;
- FIG 5:: Vertikalschnitt in der Ebene der Achsen durch eine weitere erfindungsgemäße Radaufhängung mit zwei schwenkbar gelagerten Verbindungsstücken/Pendeln;
- FIG 6:: Vertikalschnitt in der Ebene der Achsen durch eine weitere erfindungsgemäße Radaufhängung mit zwei starr verbundenen Verbindungsstücken/Pendeln;
- FIG 7:: Vertikalschnitt in der Rotationsebene des Hauptrades durch eine erfindungsgemäße Radaufhängung mit schwenkbar gelagertem Verbindungsstück und Allseitenrad-Antrieb;
- FIG 8:: Vertikalschnitt senkrecht zur Rotationsebene durch die erfindungsgemäße Radaufhängung aus FIG 7;
- FIG 9:: mobiles C-Bogen-System mit erfindungsgemäßen Radaufhängungen.

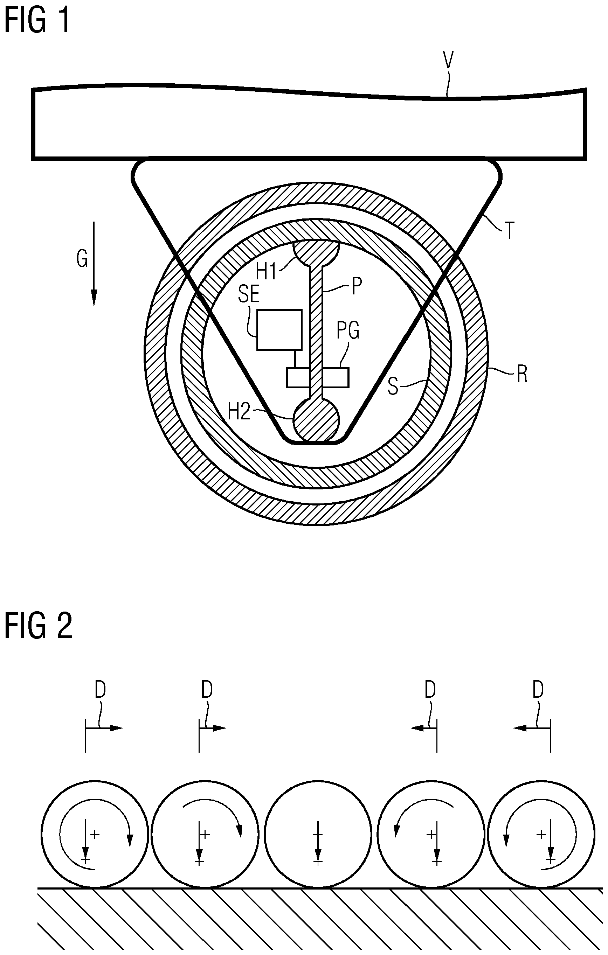

In der **Figur 1** wird das Grundprinzip der vorliegenden Erfindung schematisch dargestellt. Diese zeigt ein elektrisch angetriebenes Rad bestehend aus einem Rotor R, einem darin gelagerten Stator S. Die Lagerung und die elektrischen Bauteile sind zur besseren Übersticht nicht dargestellt. Der Stator S ist über einen ersten Haltepunkt H1 - entsprechend einem ersten Krafteinwirkungspunkt - mit dem Verbindungsstück P verbunden. Weiterhin ist das Verbindungsstück P über einen zweiten Haltepunkt H2 - entsprechend einem zweiten Krafteinwirkungspunkt - über einen Tragrahmen T mit einer Vorrichtung V verbunden, so dass die Gewichtskraft über das Verbindungsstück P auf das Rad geleitet wird. Der zweite Haltepunkt H2 des Verbindungsstückes P ist dabei bezogen auf die Gewichtskraft G unterhalb des ersten Haltepunktes H1 angeordnet. Erfindungsgemäß können die Haltepunkte H1, H2 in Form von festen Verbindungen oder flexiblen Lagerungen, beispielsweise einer axialen Lagerung oder einem Kugelgelenk ausgestaltet sein. Das Verbindungsstück P kann entsprechend flexibel oder starr ausgebildet werden und erfüllt die Funktion eines mehr oder minder starren Pendels, das an einer Seite befestigt ist und an der anderen Seite mit einer großen Masse verbunden ist. Es sollte so ausgestaltet sein, dass seitlich auftretende Kräfte eine Auslenkung des Verbindungsstückes oder eine entsprechende Verbiegung oder zumindest Verspannung erzeugen, die detektiert werden kann.

Wirkt nur die Gewichtskraft G der Vorrichtung auf dieses Verbindungsstück, so befindet sich das Verbindungsstück P - wie dargestellt - in einer neutralen Ausgangsposition. Werden horizontale Schubkräfte wirksam, so bewirken diese eine Auslenkung des Verbindungsstückes P, welche durch entsprechende Sensoren detektiert werden können. Mit Hilfe eines Regelkreises mit der Auslenkung als Eingangswert und einem Ausgangswert, der den elektrischen Antrieb des Rades steuert, können die auftretenden Schubkräfte, gegebenenfalls auch unter Detektion der Richtung der Schubkräfte und unter Ausrichtung der Antriebsrichtung, unterstützt werden, so dass ein einfaches Anschieben der Vorrichtung durch einen Maschinenbediener kraftverstärkend unterstützt wird. Umgekehrt bewirkt auch ein bremsendes Eingreifen an der Vorrichtung, eine Auslenkung des Verbindungsstückes P, so dass bei einer kontinuierlichen Fortbewegung der Vorrichtung und bremsender Einwirkung durch den Maschinenbediener entweder aktiv eine Bremsung ausgelöst werden kann oder der elektrische Antrieb in einen Generatormodus geschaltet werden kann, der ein kraftunterstützendes Abbremsen bewirkt.

Ergänzend ist schematisch eine in den Radantrieb integrierte Steuerelektronik SE gezeigt, welche von einem Sensor, hier in Form eines Positionsgebers PG die Auslenkungsinformationen des Verbindungsstückes P erhält und an die Steuerelektronik des Rades übergibt. Alternativ zu einem oder mehreren Positionsgebern können beispielsweise auch Dehnmessstreifen verwendet werden, wobei bereits mit Hilfe mindestens dreier Dehnmessstreifen nicht nur der Betrag sondern auch die Richtung einer Tension des Verbindungsstückes detektierbar ist.

Zur Verdeutlichung der Wirkung der Erfindung ist in der **Figur 2** eine Prinzipdarstellung der Krafteinwirkungen auf die erfindungsgemäße Radaufhängung dargestellt. In der Mitte ist die neutrale Situation gezeigt, in der lediglich die Gewichtskraft G auf das System einwirkt. Entsprechend befinden sich die Krafteinwirkungspunkte H1 und H2, die hier als Kreuze gezeichnet sind senkrecht übereinander gezeigt werden, senkrecht übereinander. In den seitlich davon gezeigten Darstellungen ist jeweils gezeigt, wie sich das System verhält, wenn ein Druck D beziehungsweise eine solche Schubkraft auf das System ausgeübt wird. Hierbei entspricht die unterschiedliche Länge der Vektoren D deren Größe und die Länge der Rotationsvektoren der elektrischen Vortriebskraft, die durch die Regelung entsprechend erzeugt wird.

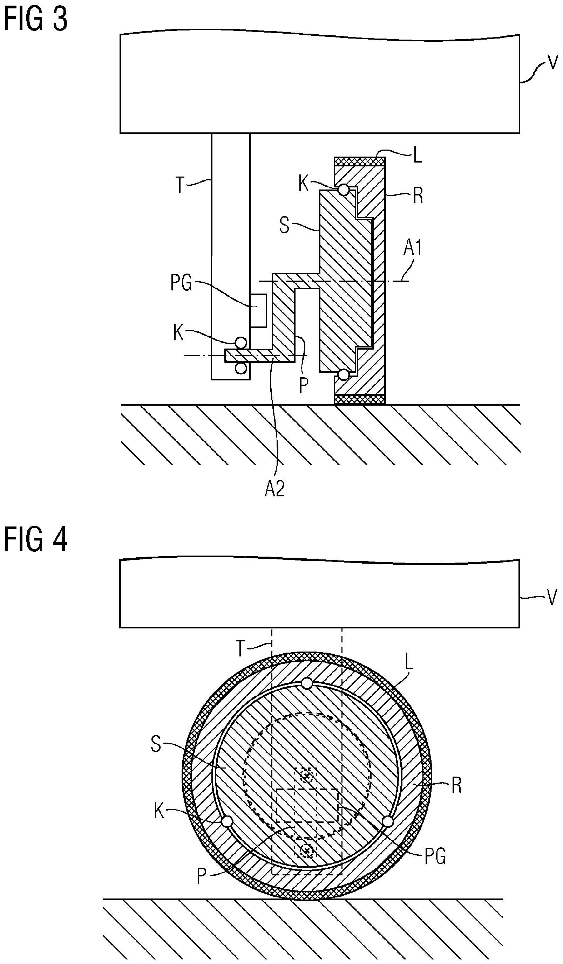

Die **Figuren 3 und 4** zeigen eine spezielle Ausführungsvariante einer erfindungsgemäßen Radaufhängung in einem Vertikalschnitt in der Ebene der Achsen A1 und A2 und senkrecht dazu mit schwenkbar gelagertem Verbindungsstück/Pendel P. In dieser Ausführungsvariante ist der Tragrahmen T fest mit der Vorrichtung V beziehungsweise deren Chassis verbunden. In unteren Bereich des Tragrahmens T befindet sich eine Lagerung für eine Pendelachse A2, die mit dem unteren Ende des Verbindungsstückes V verbunden ist. Das hier verwendete elektrisch angetriebene Rad entspricht im Wesentlichen einem Nabenantrieb, wobei der Stator S fest mit dem oberen Ende des Verbindungsstückes V verbunden ist. An Stator S ist der elektrisch angetriebene Rotor R mit Hilfe von Kugeln K oder auf sonstige Weise rotierbar um die Motorachse A1 gelagert. Das Verbindungsstück V ist derart mit den Achsen A1 und A2 verbunden, dass die Motorachse A1 und die Pendelachse A2 parallel zueinander orientiert sind, wobei die Motorachse A2 über der Pendelachse A1 angeordnet ist. Zusätzlich befindet sich zur Sicherstellung einer besseren Haftung auf dem Untergrund noch eine gummierte Lauffläche L auf der Umfangsseite des Rotors R.

Aufgrund der Verwendung und Anordnung der Achsen A1 und A2 ist diese Radaufhängung dazu ausgelegt lediglich die Schubkräfte zu verstärken, die eine Kraftkomponente senkrecht auf die von den Achsen A1 und A2 aufgespannte Ebene aufweisen. In dieser Ebene wirkende Kräfte erzeugen keine Auslenkung des Verbindungsstückes P.

Zur Detektion der Auslenkung des Verbindungsstückes P oder fest damit verbundener sonstiger Teil ist ein Positionsgeber PG angebracht, der seine Informationen einem Regelkreis zur Ansteuerung des elektrischen Antriebs weitergibt. Die elektrischen Komponenten des Elektroantriebes sind nicht explizit dargestellt. Es wird diesbezüglich auf die allgemein bekannte Ausführung von elektrischen Nabenmotoren und Nabengeneratoren hingewiesen, wie sie beispielsweise auch im Bereich von Elektrofahrrädern verwendet werden.

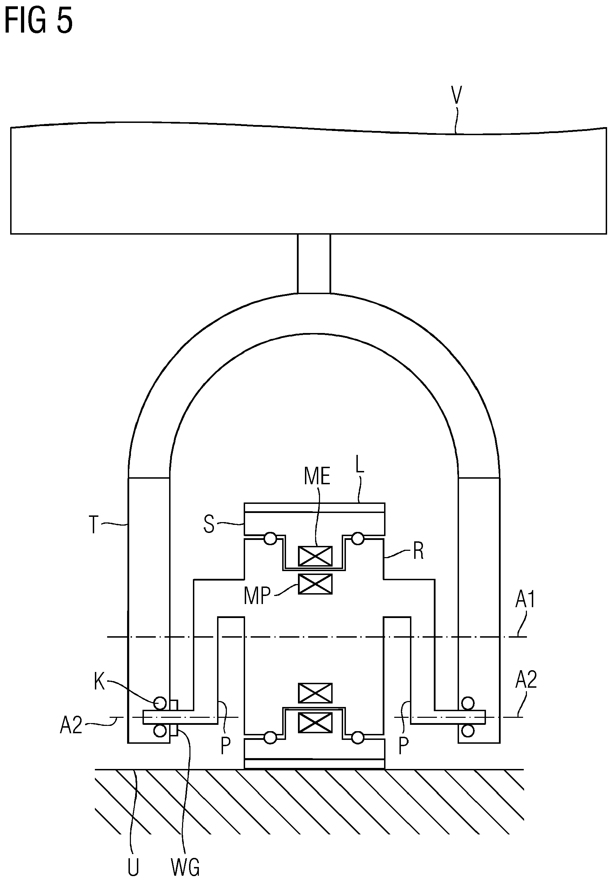

Eine alternative ähnliche Ausführungsform einer erfindungsgemäßen Radaufhängung ist in der **Figur 5** gezeigt. Hier ist ein Vertikalschnitt in der von der Pendelachse A1 und der Motorachse A2 aufgespannten Ebene mit zwei schwenkbar gelagerten Verbindungsstücken P zu sehen, die aufgrund ihrer symmetrischen Ausführung konstruktiv stabiler ist. Der Tragrahmen T ist an der Vorrichtung V beziehungsweise dessen Gehäuse befestigt und weist im unteren Teil eine Lagerung für die beiden koaxial angeordneten Pendelachsen A2 auf. Die dargestellten Kugeln K sollen lediglich symbolisch eine schwenkbare Lagerung darstellen, wobei erfindungsgemäß hier und in den anderen Ausführungen gezeigten Lagerungen auch sonstige Wälzlager oder Gleitlager oder andere Systeme verwendet werden können.

Die beiden Pendelachsen A2 sind jeweils fest mit einem Verbindungsstück P verbunden, welches als Pendel wirkt und sich nach oben erstreckt, wo es mit dem Stator S des elektrisch angetriebenen Rades verbunden ist. Es wird darauf hingewiesen, dass das hier gezeigte Verbindungsstück in seiner Form lediglich die prinzipiell feste Verbindung zwischen dem Stator S und der Pendelachse verdeutlichen soll. Grundsätzlich ist der Ort der Verbindung und die Form der Verbindung zwischen der Pendelachse A2 und dem Stator S beliebig, solange sie starr ist und jede Bewegung der Pendelachse A2 auf den Stator S übertragen wird. Wesentlich ist hierbei, dass die Motorachse A1 oberhalb der Pendelachse A1 angeordnet ist. Beispielsweise lässt sich das Verbindungsstück P in den Stator selbst "integrieren", ohne dass sich am Grundprinzip der erfindungsgemäßen Radaufhängung etwas ändert.

Um den Stator S der Rotor R gelagert, wobei im Rotor R mehrere Permanentmagnete ME und im Stator S mehrere Elektromagnete ME untergebracht sind, die den elektrischen Antrieb bewirken. Umfangsseitig ist der Rotor R außerdem von einer Lauffläche L umgeben, die beispielsweise aus Gummi oder Kunststoff bestehen kann und für eine verbesserte Haftung des Rades auf dem Untergrund U sorgt.

Die Auslenkung des Verbindungsstückes P aufgrund einer angreifenden Schubkraft mit horizontaler Komponente senkrecht zur Pendelachse P wird hier beispielhaft durch einen im Bereich der Lagerung der Pendelachse P angeordneten Winkelgeber WG detektiert, der - ohne dass dies explizit gezeigt ist - mit der Steuerelektronik verbunden ist, welche den elektrischen Antrieb - mit Hilfe von in der Steuerelektronik vorliegendem Prozessor mit Speicher und dort vorliegendem entsprechendem Programmcode im Betrieb - in erfindungsgemäßer Weise steuert.

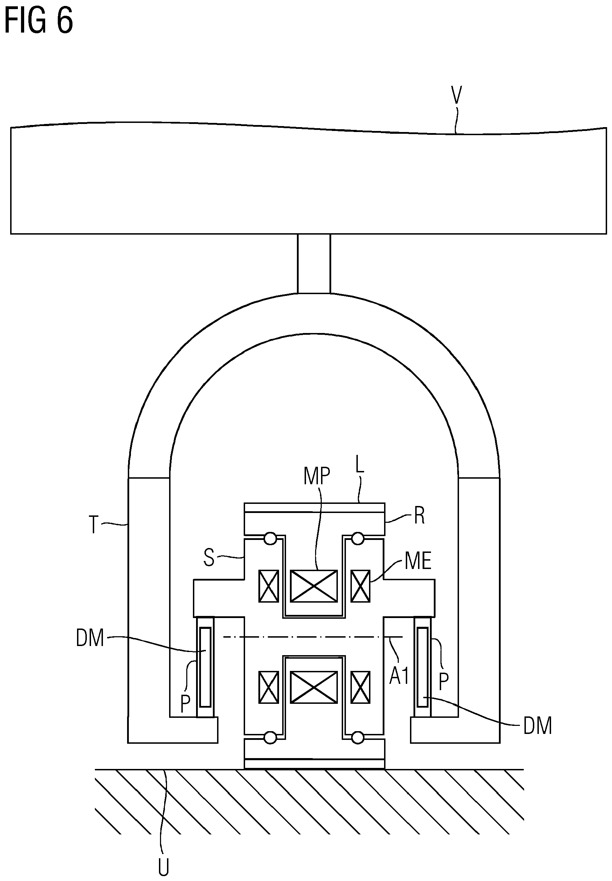

Während die Ausführungsformen der in den Figuren 3 bis 5 gezeigten Radaufhängungen schwenkbar gelagerte Verbindungsstücke P aufweisen, zeigt die **Figur 6** eine Ausführung, bei der die beiden Verbindungsstücke P zwischen dem Stator S des hier gezeigten elektrisch angetriebenen Rades eine weitgehend starre Verbindung zum Tragrahmen T aufweisen. Die notwendige Flexibilität wird hier durch eine nicht starre sondern federnd-flexible Ausführung des Verbindungsstückes P erreicht. Im Falle einer relativ weichen Ausführung der Verbindungsstücke P kann zur Detektion der Auslenkung wiederum ein Positionssensor verwendet werden. Sind die Verbindungsstücke P allerdings härter, so dass die entstehenden Auslenkungen nur mehr aufwendig zu bestimmen sind, kann es vorteilhaft sein, die Tension (=Spannung) beziehungsweise die Verbiegung der Verbindungsstücke P durch daran angebrachte Dehnmessstreifen DM zu detektieren.

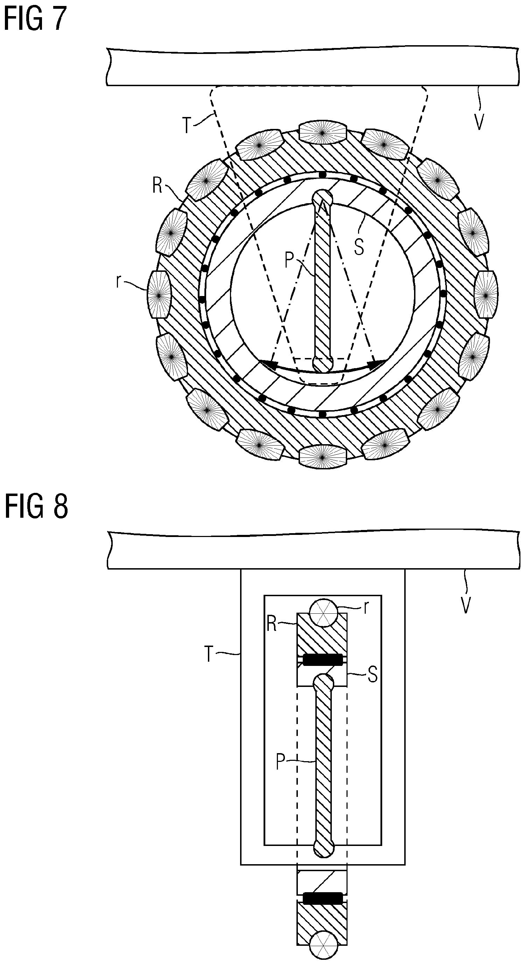

Eine nochmals andere Ausführungsform einer erfindungsgemäßen Radaufhängung ist in den **Figuren 7 und 8** im Vertikalschnitt in der Rotationsebene des Hauptrades einerseits und senkrecht zur Rotationsebene andererseits gezeigt. Während die in den Figuren 3 bis 6 gezeigten Systeme bezüglich der Auslenkungsrichtung lediglich einen Freiheitsgrad aufweisen, also nur in einer Richtung vor beziehungsweise zurück ausgelenkt werden können und entsprechend auch nur ein einfaches Rad aufweisen, welches - ohne Schlupf - lediglich entlang einer Geraden bewegt werden kann, wird hier ein System gezeigt, bei dem sowohl die Schubdetektion als auch die Bewegung in beliebige horizontale Richtung ausgerichtet ist.

Hierbei ist das Rad als sogenanntes Allseitenrad ausgeführt, welches einerseits als Nabenantrieb mit einem innenliegenden Stator S und einem, um diesen umlaufenden elektrisch angetriebenen, großen Rotor R ausgestaltet ist. Zusätzlich sind auf dem Umfang des großen Rotors R eine Vielzahl kleiner Rotoren r angeordnet, deren Rotationsachsen jeweils tangential zur Umfangsrichtung des großen Rotors R ausgerichtet sind. Die kleinen Rotoren r sind ebenfalls elektrisch angetrieben, vorzugsweise kann der große Rotor R damit für die kleinen Rotoren jeweils den Stator darstellen. Alternativ können jedoch auch die Achsen der kleinen Rotoren r auf sonstige Weise - zum Beispiel über einen zentralen Elektromotor im großen Rotor R - angetrieben werden. Auf diese Weise kann das Rad dieser Ausführung durch Zusammenwirken der Bewegung des großen Rotors R und der kleinen Rotoren r in jede beliebige Richtung gesteuert werden.

Entsprechend ist auch das Verbindungsstück P zwischen dem Stator S und dem Tragrahmen T so gelagert, dass es sich in beliebige horizontale Richtungen ausgelenkt werden kann. In der gezeigten Darstellung wird dies durch die beiden endseitig am Verbindungsstück P angeordneten Kugelgelenke verwirklicht. Es wird dabei darauf hingewiesen, dass es allerdings grundsätzlich ausreicht, wenn eines der beiden Enden über ein Kugelgelenk gelagert wird und das jeweils andere Ende eine feste Verbindung aufweist. Die durch einen externen Schub bewirkten relativen Auslenkungen zwischen Verbindungsstück P und Tragrahmen T beziehungsweise zwischen Verbindungsstück P und Stator S müssen entsprechend richtungsspezifisch detektiert werden und können dann ebenfalls richtungsspezifisch mit Hilfe einer Steuereinheit über den elektrischen Antrieb des Allseitenrades unterstützt werden.

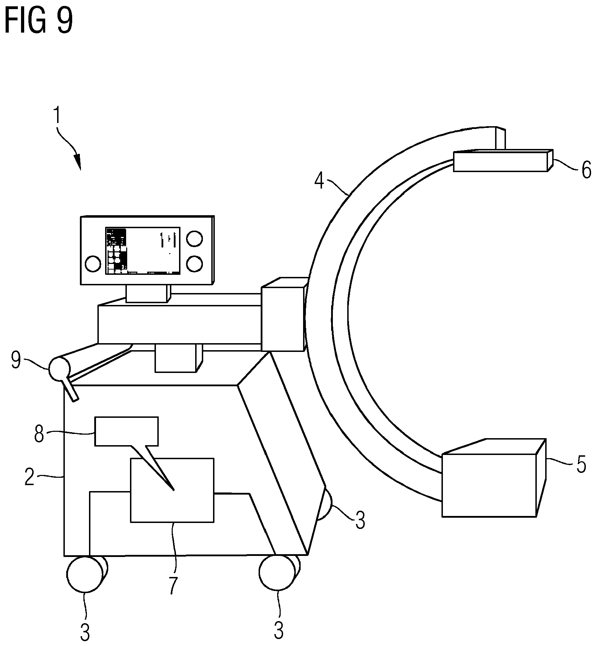

Neben der Radaufhängung wird in der vorliegenden Schrift auch eine damit ausgestattete Vorrichtung vorgeschlagen. Stellvertretend für eine solche erfindungsgemäße Vorrichtung, ist in der **Figur 9** ein fahrbares medizinisches Gerät, genauer ein mobiles C-Bogen-System mit erfindungsgemäßen Radaufhängungen dargestellt. Das mobile C-Bogen-System 1 verfügt über Gehäuse 2, an dem insgesamt vier Räder 3 angeordnet sind, welche die Mobilität des Systems gewährleisten. Erfindungsgemäß sind hierbei mindestens zwei dieser Räder 3 mit einer kraftunterstützenden Radaufhängung, zum Beispiel gemäß einem der zuvor gezeigten Ausführungsvarianten, ausgestaltet. Das C-Bogen-System selbst ist mit dem üblicherweise vorhandenen C-Bogen 4 ausgerüstet, an dem eine Röntgenröhre 5 und ein flacher Röntgendetektor 6 befestigt ist. Im Gehäuse befindet sich auch eine Rechen- und Steuereinheit 7, welche über einen Speicher 8 verfügt, in dem Programmcode gespeichert ist, der im Betrieb ausgeführt wird. Erfindungsgemäß kann diese Rechen- und Steuereinheit 7 auch mit den in den erfindungsgemäßen Radaufhängungen befindlichen Sensoren verbunden sein und Schubkräfte, welche beispielsweise an einem Griff 9 auf das C-Bogen-System 1 ausgeübt werden, detektieren und entsprechend mit Hilfe gespeicherten Programmcodes die Elektroantriebe in den Radaufhängungen so steuern, dass die von einem Bediener aufgewandten Schubkräfte zur Fortbewegung des C-Bogen-Systems unterstützt werden beziehungsweise falls Schubkräfte aufgrund einer Kollision auftreten diese zu mildern.

Ein wesentlicher Vorteil der Erfindung liegt also auch im enthaltenen Kollisionsschutz. Wenn die Pendelwelle oder die daran angreifende Masse gegen ein Hindernis stößt, wird das Pendel ausgelenkt und ermöglicht so eine Nachgiebigkeit. Durch die Auslenkung Verbindungsstückes wird die Kollision detektiert, wodurch der Motor ein entgegengesetztes Drehmoment anlegen und aktiv bremsen kann. Dadurch kann die Kollisionsenergie drastisch reduziert oder auch verhindert werden.

Ein anderer Vorteil der Erfindung liegt auch bei den Kosten des Sensorprinzips. Zur Detektion der Auslenkung eignen sich hervorragend Hall-Sensoren, die in der Automobilindustrie millionenfach eingesetzt werden und aus diesem Grund sehr günstig sind.

Außerdem hat die Kraftunterstützung mithilfe des hier beschriebenen Pendelkonzepts den Vorteil, dass keine bestimmten Tasten, Joystick oder Komponenten am Gerät bedient werden müssen, um die externe Kraft zu messen und eine Kraftunterstützung vom Motor zu erhalten. Die ist vor allem vorteilhaft für den Bediener des Geräts, da keine Einweisung erforderlich ist, weil alles identisch zur bisherigen Bedienung ist. Da die Bewegung alleine durch das als Pendel wirkende Verbindungsstück erfasst werden kann, entfallen jegliche Sensorik oder Haptik an den Bedienelementen und die Bedienelemente selbst. Das ermöglicht den Bediener das Gerät von jeder Stelle aus zu bedienen, ohne explizit einen Schalter oder Bedienelement zu betätigen zu müssen. Dadurch werden die Freiheitsgrade zur Bedienung des Systems deutlich erhöht.

Vorteilhaft ist weiterhin, dass eine Reduzierung der Sensorik zur Krafterkennung am System und gleichzeitig eine Reduzierung des Verkabelungsaufwandes und somit von Schnittstellen und Steuer- und Regelungstechnik erreicht wird.

Über die erfindungsgemäße Radaufhängung kann der Benutzer durch das Aufbringen einer Gegenkraft bei einer sich bereits bewegenden Vorrichtung ein Bremsen auslösen und damit eine Quasi-Geschwindigkeitsreglung im Antrieb realisieren.

Der Einsatz der erfindungsgemäßen Radaufhängung ist in vielfältigen Bereichen möglich, vor allem aber dort, wo eine Interaktion zwischen Mensch und Maschine gefordert wird.

Ein weiterer Vorteil der Erfindung liegt darin, dass damit Vorrichtungen, die bis dato nur durch manuelle Steuerungen motorisch bewegt werden können, zukünftig auch manuell mit motorischer Unterstützung fortbewegt werden können. Dies ist insbesondere für das Thema "Mensch-Maschinen- bzw. Mensch-Roboter-Kooperation" von Interesse.

Insgesamt wird mit der Erfindung also eine Radaufhängung einer mobilen Vorrichtung mit einem Elektroantrieb eines Rades zur Unterstützung eines manuellen Bewegungsimpulses vorgeschlagen, wobei zwischen einem mit der Vorrichtung verbundenen Stützelement oder Tragrahmen und einem innenliegenden Stator eines Elektroantriebes ein Verbindungsstück beweglich oder biegbar so angeordnet oder anbracht ist, dass das Verbindungsstück aufgrund der Gewichtskraft der Vorrichtung und ohne sonstige einwirkende Kräfte in einer Ausgangsposition gehalten wird. Weiterhin ist mindestens ein Sensor - zum Beispiel ein Dehnmessstreifen, ein Näherungssensor, ein Positionsgeber oder ein Winkelgeber - angebracht, der eine Auslenkung des Verbindungsstückes detektiert, und eine Steuerelektronik vorgesehen - zum Beispiel in Form einer programmierbaren Steuerelektronik mit Prozessor, Speicher und entsprechendem Programmcode, der im Betrieb ausgeführt wird -, die derart ausgestaltet ist, dass sie mit dem Elektroantrieb einer Auslenkung oder Verbiegung des Verbindungsstückes entgegenwirkt.

## Patentansprüche

1. Radaufhängung einer Vorrichtung mit einem Elektroantrieb eines Rades zur Unterstützung eines manuellen Bewegungsimpulses, aufweisend die folgenden Merkmale:
ein Verbindungsstück (P), welches:
- biegbar mit einem an der Vorrichtung (V) verbundenen Stützelement (T) befestigt ist,
- wobei das Stützelement (T) zumindest einen Teil des Gewichtes der Vorrichtung (V) abstützt,
**dadurch gekennzeichnet, dass**
der Elektroantrieb mindestens einen Elektromotor mit einem innenliegendem Stator (S) und einem außenliegendem Rotor (R) aufweist, wobei der Stator (S) fest mit dem Verbindungsstück (P) verbunden ist und das Verbindungsstück (P) aufgrund der nach unten wirkenden Gewichtskraft (G) der Vorrichtung (V) unter Abwesenheit einer senkrecht zur Gewichtskraft (G) wirkenden Schubkraft (D) selbsttätig eine Ausgangsposition einnimmt, und
eine Steuerelektronik (SE, 7), die derart ausgestaltet ist, dass sie mit dem Elektroantrieb einer Auslenkung oder Verbiegung des Verbindungsstückes (P) entgegenwirkt.

2. Radaufhängung gemäß dem voranstehenden Patentanspruch 1, **dadurch gekennzeichnet, dass** die Auslenkung und/oder Verbiegung des Verbindungsstückes (P) in einer Ebene senkrecht zur Gewichtskraft (G) gemessen wird.

3. Radaufhängung gemäß einem der voranstehenden Patentansprüche 1 bis 2, **dadurch gekennzeichnet, dass** der Elektroantrieb einen Elektro-Nabenmotor aufweist.

4. Radaufhängung gemäß dem voranstehenden Patentanspruch 1, **dadurch gekennzeichnet, dass** die Auslenkung und/oder Verbiegung des Verbindungsstückes (P) in mindestens zwei voneinander unabhängigen Ebenen senkrecht zur Gewichtskraft (G) gemessen wird.

5. Radaufhängung gemäß einem der voranstehenden Patentansprüche 1 bis 4, **dadurch gekennzeichnet, dass** zur Messung der Verbiegung oder Auslenkung des Verbindungsstückes (P) je zu detektierender Auslenkungsrichtung mindestens ein Dehnmessstreifen (DM) oder ein Positionssensor (PG) angebracht ist.

6. Radaufhängung gemäß dem voranstehenden Patentanspruch 5, **dadurch gekennzeichnet, dass** der Elektroantrieb als elektrisch angetriebenes Allseitenrad mit variabler Antriebsrichtung in einer Ebene ausgebildet ist.

7. Radaufhängung einer Vorrichtung mit einem Elektroantrieb eines Rades zur Unterstützung eines manuellen Bewegungsimpulses, aufweisend die folgenden Merkmale:
eine Pendelachse (A2), welche:
- schwenkbar an einem an der Vorrichtung (V) befestigen Stützelement (T) gelagert ist,
- wobei das Stützelement (T) zumindest einen Teil des Gewichtes (G) der Vorrichtung (V) abstützt,
einen Pendelarm (P), und
eine Motorachse (A1), **dadurch gekennzeichnet, dass**
die Motorachse (A1) über den Pendelarm (P) fest mit der Pendelachse (A2) verbunden ist,
die Pendelachse (A2) unterhalb der Motorachse (A1) angeordnet ist, so dass der Pendelarm (P) aufgrund der nach unten wirkenden Gewichtskraft (G) der Vorrichtung (V) unter Abwesenheit eine senkrecht zur Gewichtskraft (G) und senkrecht zur Pendelachse (A2) wirkenden Schubkraft (D) selbsttätig eine unausgelenkte Ausgangsposition einnimmt,
weiterhin aufweisend einen Elektroantrieb, der mit der Motorachse (A1) verbunden ist, und
eine Steuerelektronik (SE, 7), die derart ausgestaltet ist, dass sie mit dem vom Elektroantrieb angetriebenen Rad einer Auslenkung des Pendelarms (P) entgegenwirkt.

8. Radaufhängung gemäß dem voranstehenden Patentanspruch 6, **dadurch gekennzeichnet, dass** die Pendelachse (A2) und die Motorachse (A1) parallel zueinander ausgerichtet sind.

9. Radaufhängung gemäß einem der voranstehenden Patentansprüche 7 bis 8, **dadurch gekennzeichnet, dass** der Elektroantrieb ein Rad antreibt, das zur Bewegung der Vorrichtung dient.

10. Radaufhängung gemäß einem der voranstehenden Patentansprüche 7 bis 9, **dadurch gekennzeichnet, dass** der Elektroantrieb einen Stator (S) und einen Rotor (R) aufweist, wobei diese so ausgestaltet sind, dass der Stator (S) mit dem Pendelarm (P) fest verbunden ist.

11. Radaufhängung gemäß dem voranstehenden Patentanspruch 10, **dadurch gekennzeichnet, dass** Elektromagnete (ME) im Stator (S) und Permanentmagnete (MP) im Rotor (R) angeordnet sind.

12. Radaufhängung gemäß einem der voranstehenden Patentansprüche 7 bis 11, **dadurch gekennzeichnet, dass** der Rotor (R) umfangsseitig von einem ein Laufrad (L) umgeben ist.

13. Radaufhängung gemäß einem der voranstehenden Patentansprüche 7 bis 12, **dadurch gekennzeichnet, dass** ein Sensor (PG, WG, DM) vorgesehen ist, welcher eine Auslenkung des Pendelarms (P) detektiert und an die Steuerelektronik (SE, 7) des Elektroantriebes weiterleitet.

14. Radaufhängung gemäß dem voranstehenden Patentanspruch 13, **dadurch gekennzeichnet, dass** der Sensor ein Winkelsensor (WG) ist.

15. Radaufhängung gemäß dem voranstehenden Patentanspruch 14, **dadurch gekennzeichnet, dass** der Sensor ein Positionssensor (PG) ist.

16. Vorrichtung mit mindestens einer Radaufhängung, **dadurch gekennzeichnet, dass** die mindestens eine Radaufhängung gemäß einem der voranstehenden Patentansprüche 1 bis 15 ausgebildet ist.

17. Vorrichtung gemäß dem voranstehenden Patentanspruch 15, **dadurch gekennzeichnet, dass** die Vorrichtung ein fahrbares medizinisches Gerät (1) ist.

18. Vorrichtung gemäß einem der voranstehenden Patentansprüche 16 bis 17, **dadurch gekennzeichnet, dass** das Stützelement mindestens einer Radaufhängung um eine vertikale Schwenkachse schwenkbar mit ausgeführt ist.

19. Vorrichtung gemäß einem der voranstehenden Patentansprüche 16 bis 18, **dadurch gekennzeichnet, dass** das Stützelement mindestens einer Radaufhängung unbeweglich an einem Gehäuse und/oder Chassis fest um eine vertikale Schwenkachse schwenkbar mit ausgeführt ist.

## Claims

1. Wheel suspension of a device having an electrical drive of a wheel for supporting a manual movement impulse, having the following features:
a connector piece (P) which:
- is bendably fastened to a support element (T) connected to the device (V),
- wherein the support element (T) supports at least part of the weight of the device (V),
**characterised in that**
the electrical drive has at least one electric motor with an interior stator (S) and an exterior rotor (R), wherein the stator (S) is firmly attached to the connector piece (P) and the connector piece (P) automatically assumes a starting position due to the downward acting gravity (G) of the device (V) in the absence of a shear force (D) acting perpendicularly to gravity (G), and
control electronics (SE, 7) which are designed such that together with the electrical drive they counteract a deflection or bending of the connector piece (P).

2. Wheel suspension according to the preceding claim 1, **characterised in that** the deflection and/or bending of the connector piece (P) is measured in a plane perpendicular to gravity (G).

3. Wheel suspension according to one of the preceding claims 1 to 2, **characterised in that** the electrical drive has an electric hub motor.

4. Wheel suspension according to the preceding claim 1, **characterised in that** the deflection and/or bending of the connector piece (P) is measured in at least two independent planes perpendicular to gravity (G).

5. Wheel suspension according to one of the preceding claims 1 to 4, **characterised in that** at least one strain gage (DM) or one position sensor (PG) is attached to measure the bending or deflection of the connector piece (P) for each deflection direction to be detected.

6. Wheel suspension according to the preceding claim 5, **characterised in that** the electrical drive is designed as an electrically driven omni wheel having a variable drive direction in one plane.

7. Wheel suspension of a device having an electrical drive of a wheel for supporting a manual movement impulse, having the following features:
a floating axle (A2) which:
- is mounted pivotably on a support element (T) which is fastened to the device (V),
- wherein the support element (T) supports at least part of the weight (G) of the device (V),
a pendulum arm (P), and
a motor axle (A1),
**characterised in that**
the motor axle (A1) is firmly connected to the floating axle (A2) by way of the pendulum arm (P),
the floating axle (A2) is arranged below the motor axle (A1) such that the pendulum arm (P) automatically assumes an undeflected starting position due to the downward acting gravity (G) of the device (V) in the absence of a shear force (D) acting perpendicularly to gravity (G) and perpendicularly to the floating axle (A2),
further having an electrical drive which is connected to the motor axle (A1), and
control electronics (SE, 7) which are designed such that together with the wheel driven by the electrical drive they counteract a deflection of the pendulum arm (P).

8. Wheel suspension according to the preceding claim 6, **characterised in that** the floating axle (A2) and the motor axle (A1) are aligned parallel to one another.

9. Wheel suspension according to one of the preceding claims 7 to 8, **characterised in that** the electrical drive drives a wheel which serves to move the device.

10. Wheel suspension according to one of the preceding claims 7 to 9, **characterised in that** the electrical drive has a stator (S) and a rotor (R), wherein these are designed such that the stator (S) is firmly connected to the pendulum arm (P).

11. Wheel suspension according to the preceding claim 10, **characterised in that** electromagnets (ME) are arranged in the stator (S) and permanent magnets (MP) in the rotor (R).

12. Wheel suspension according to one of the preceding claims 7 to 11, **characterised in that** the rotor (R) is circumferentially surrounded by an impeller (L).

13. Wheel suspension according to one of the preceding claims 7 to 12, **characterised in that** a sensor (PG, WG, DM) is provided which detects and forwards a deflection of the pendulum arm (P) to the control electronics (SE, 7) of the electrical drive.

14. Wheel suspension according to the preceding claim 13, **characterised in that** the sensor is an angle sensor (WG).

15. Wheel suspension according to the preceding claim 14 **characterised in that** the sensor is a position sensor (PG).

16. Device with at least one wheel suspension, **characterised in that** at least one wheel suspension is designed according to one of the preceding claims 1 to 15.

17. Device according to the preceding claim 15, **characterised in that** the device is a mobile medical device (1).

18. Device according to one of the preceding claims 16 to 17, **characterised in that** the support element of at least one wheel suspension is pivotably designed around a vertical pivot axis.

19. Device according to one of the preceding claims 16 to 18, **characterised in that** the support element of at least one wheel suspension is immovably mounted on a housing and/or chassis so as to be pivotable in a fixed manner around a vertical pivot axis.

## Revendications

1. Suspension de roue d'un système ayant un entraînement électrique d'une roue pour assister une impulsion manuelle de déplacement, comportant les caractéristiques suivantes :
une pièce (P) de liaison, qui :
- est fixée, avec possibilité de déformation, à un élément (T) d'appui relié au système (V),
- l'élément (T) d'appui soutenant au moins une partie du poids du système (V),
**caractérisée en ce que**
l'entraînement électrique a au moins un moteur électrique ayant un stator (S) se trouvant à l'intérieur et un rotor (R) se trouvant à l'extérieur, le stator (S) étant relié fixement à la pièce (P) de liaison et la pièce (P) de liaison prenant, en raison de la force (G) due au poids agissant vers le bas du système (V), en l'absence d'une force (D) de poussée agissant perpendiculairement à la force (G) due au poids, automatiquement une position initiale, et
une électronique (SE, 7) de commande, conformée de manière à s'opposer, par l'entraînement électrique, à une excursion ou à une déformation de la pièce (P) de liaison.

2. Suspension de roue suivant la revendication 1 précédentes, **caractérisée en ce que** l'excursion et/ou la déformation de la pièce (P) de liaison est mesurée dans un plan perpendiculaire à la force (G) due au poids.

3. Suspension de roue suivant l'une des revendications 1 à 2 précédentes, **caractérisée** en ce l'entraînement électrique a un moteur électrique à moyeu.

4. Suspension de roue suivant la revendication 1 précédente, **caractérisée en ce que** l'excursion et/ou la déformation de la pièce (P) de liaison est mesurée perpendiculairement à la force (G) due au poids dans au moins deux plans indépendants l'un de l'autre.

5. Suspension de roue suivant l'une des revendications 1 à 4 précédentes, **caractérisée en ce que**, pour mesurer la déformation ou l'excursion de la pièce (p) de liaison, respectivement vers une direction d'excursion à détecter, il est mis au moins une jauge (DM) extensométrique ou un capteur (PG) de position.

6. Suspension de roue suivant la revendication (5) précédente, **caractérisée en ce que** l'entraînement électrique est constitué sous la forme d'une roue omnidirectionnelle entraînée électriquement à direction d'entraînement variable dans un plan.

7. Suspension de roue d'un système ayant un entraînement électrique d'une roue pour assister une impulsion de déplacement manuelle, comportant les caractéristiques suivantes :
- un axe (A2) oscillant, qui :
- est monté pivotant sur un élément (T) d'appui fixé au système (V),
- dans lequel l'élément (T) d'appui soutient au moins une partie du poids (G) du système (V),
un bras (P) oscillant, et
un axe (A1) de moteur,
**caractérisée en ce que**
l'axe (A1) du moteur est relié fixement à l'axe (A2) oscillant par l'intermédiaire du bras (P) oscillant, l'axe (A2) oscillant est disposé en dessous de l'axe (A1) du moteur, de sorte que le bras (P) oscillant prenne, en raison de la force (G) due au poids agissant vers le bas du système (V), en l'absence d'une force (D) de poussée agissant perpendiculairement à la force (G) due au poids et perpendiculairement à l'axe (A2) oscillant, automatiquement une position initiale sans excursion,
comportant, en outre, un entraînement électrique, qui est relié à l'axe (A1) du moteur, et
une électronique (SE, 7) de commande, conformée de manière à s'opposer à une excursion du bras (P) oscillant par la roue entraînée par l'entraînement électrique.

8. Suspension de roue suivant la revendication 6 précédente, **caractérisée en ce que** l'axe (A2) oscillant et l'axe (A1) du moteur sont parallèles.

9. Suspension de roue suivant l'une des revendications 7 à 8 précédentes, **caractérisée en ce que** l'entraînement électrique entraîne une roue, qui sert à déplacer le système.

10. Suspension de roue suivant l'une des revendications 7 à 9 précédentes, **caractérisée en ce que** l'entraînement électrique a un stator (S) et un rotor (R), ceux-ci étant conformés de manière à ce que le stator (S) soit relié fixement au bras (P) oscillant.

11. Suspension de roue suivant la revendication 10 précédente, **caractérisée en ce que** des électroaimants (ME) sont disposés dans le stator (S) et des aimants (MP) permanents dans le rotor (R).

12. Suspension de roue suivant l'une des revendications 7 à 11 précédentes, **caractérisée en ce que** le rotor (R) est entouré, du côté du pourtour, d'une roue (L).

13. Suspension de roue suivant l'une des revendications 7 à 12 précédentes, **caractérisée en ce qu'**il est prévu un capteur (PG, WG, DM), qui détecte une excursion du bras (P) oscillant et l'achemine à l'électronique (SE, 7) de commande de l'entraînement électrique.

14. Suspension de roue suivant la revendication 13 précédente, **caractérisée en ce que** le capteur est un capteur (WG) d'angle.

15. Suspension de roue suivant la revendication 14 précédente, **caractérisée en ce que** le capteur est un capteur (PG) de position.

16. Système comprenant au moins une suspension de roue, **caractérisé en ce que** la au moins une suspension de roue est constituée suivant l'une des revendications 1 à 15 précédentes.

17. Système suivant la revendication 15 précédente, **caractérisé en ce que** le système est un appareil (1) médical mobile.

18. Système suivant l'une des revendications 16 à 17 précédentes, **caractérisé en ce que** l'élément d'appui d'au moins une suspension de roue est réalisé pivotant autour d'un axe de pivotement vertical.

19. Système suivant l'une des revendications 16 à 18 précédentes, **caractérisé en ce que** l'élément d'appui au moins d'une suspension de roue, fixe en étant immobile sur un boîtier et/ou un châssis, est réalisé pivotant autour d'un axe de pivotement vertical.
